# EUROPÄISCHE PATENTSCHRIFT

(11) **EP 3 230 179 B1**
(45) Veröffentlichungstag und Bekanntmachung des Hinweises auf die Patenterteilung: **04.12.2019**
(21) Anmeldenummer: 15807927.7
(22) Anmeldetag: 10.12.2015
(51) Int. Cl.: B65G 1/04

(54) **LASTAUFNAHMEVORRICHTUNG**
LOAD-RECEIVING DEVICE
DISPOSITIF DE REPRISE DE CHARGE

(30) Priorität: 10.12.2014 AT 8892014; 10.12.2014 AT 8902014
(43) Veröffentlichungstag der Anmeldung: 18.10.2017
(73) Patentinhaber: Swisslog Evomatic GMBH, 4621 Sipbachzell (AT)
(72) Erfinder: ASCHAUER, Herbert, 4600 Wels (AT)
(74) Vertreter: Ellmeyer, Wolfgang
(86) Internationale Anmeldenummer: PCT/EP2015/079256
(87) Internationale Veröffentlichungsnummer: WO 2016/092019

(56) Entgegenhaltungen:
- WO-A1-2014/038370
- DE-A1- 4 422 240
- DE-C1- 19 615 990
- JP-A- 2012 184 085
- US-A1- 2006 245 862

## Beschreibung

Die Erfindung betrifft eine Lastaufnahmevorrichtung zur Ein- und Auslagerung eines quaderförmigen Ladeguts in ein Regal bzw. aus diesem mit zwei parallel beabstandeten, ausfahrbaren Teleskoparmen, auf denen paarweise einander gegenüberliegende Mitnehmer angeordnet sind, die in eine hochgeklappte Stellung im Wesentlichen parallel zur Teleskoparmebene und in eine im Wesentlichen im rechten Winkel zu dieser vorstehenden Stellung verschwenkbar sind, wobei der Abstand d zwischen den Teleskoparmen in Abhängigkeit von der Breite des Ladegutes einstellbar ist, wobei jeder der paarweise einander gegenüberliegenden Mitnehmer unabhängig vom jeweils gegenüberliegenden Mitnehmer verschwenkbar ist, und wobei an den Teleskoparmen zumindest zwei einander gegenüberliegende Kantendetektoren angeordnet sind, die zwei einander gegenüberliegenden der Mitnehmer zugeordnet sind, und dass die Mitnehmer in Abhängigkeit vom Ausgangssignal der Kantendetektoren unabhängig voneinander verschwenkbar sind.

Mit zwei parallelen Teleskoparmen ausgestattete Lastaufnahmevorrichtungen dienen dem raschen Ein- und Auslagern von Ladegut aus einem Hochregallager. Während des Einlagerungsvorgangs werden die auf den Teleskoparmen einander gegenüberliegenden Mitnehmer im Bereich vor der Vorderkante des Ladegutes in eine horizontale fluchtende Lage geschwenkt, in der sie ihre Mitnehmerfunktion ausüben können und dann mit den ausfahrenden Teleskoparmen mitbewegt, wodurch das Ladegut in das Lagerfach verschoben wird. Entsprechend umgekehrt werden beim Auslagerungsvorgang die Teleskoparme mit hochgeschwenkten senkrechten Mitnehmern in das Lagerfach ausgefahren und dann die im Bereich hinter der Hinterkante des Ladegutes zu liegen kommenden Mitnehmer in ihre horizontale fluchtende Lage geschwenkt, woraufhin die Teleskoparme wieder eingefahren werden, sodass das Ladegut mitgenommen und in die Lastaufnahmevorrichtung eingeholt wird.

Diese Art der Ein- und Auslagerung hat sich für mittelgroße und große, vollflächige Behälter als sehr vorteilhaft herausgestellt, wohingegen es bei kleineren Behältern oder solchen, die eine strukturierte Vorder- oder Hinterseite aufweisen, relativ oft zu Verschiebefehlern oder - ungenauigkeiten kommt, sodass die tatsächlich eingelagerte Stellung von der erwarteten Stellung des Ladegutes relativ stark abweichen kann, was wiederum zu Fehlfunktionen bei der Auslagerung führen kann, da das Ladegut im Lagerfach nicht an seiner vorhergesagten Position oder in einer gegenüber diesen verdrehten Lage anzutreffen ist. Dies tritt vor allem dann auf, wenn die Ladegutbreite ungefähr gleich oder kleiner als die Länge eines der gegenüberliegenden Mitnehmer ist oder sich auf der Höhe der Horizontalposition der Mitnehmer keine satte oder symmetrische Auflage auf der Vorder- oder Hinterseite des Ladegutes ergibt, sodass ein ungleichmäßiges Führen durch die Mitnehmer erfolgt.

Aus der US 2006/0245862 A1 ist eine Lastaufnahmevorrichtung nach dem Oberbegriff des Anspruchs 1 bekannt. Aus dem Dokument geht eine Lastaufnahmevorrichtung mit parallel voneinander beabstandeten Teleskopschubarmen hervor, die mit unabhängig voneinander, quer zur Längsrichtung verschwenkbaren Mitnehmern ausgestattet sind, welche dem Verlagern von Ladegut dienen, wobei sie zwischen zwei Positionen, einer fluchtenden Ruheposition und einer vorstehenden Arbeitsposition, verschwenkbar sind. Mittels den Mitnehmern gegenüberliegenden Sensoren kann die Lage des Ladeguts bestimmt werden.

Eine ähnliche Lastaufnahmevorrichtung wie in der US 2006/0245862 A1 ist in der WO 2014/038370 A1 gezeigt.

Ferner offenbart JP 2012 184085 A eine Lastaufnahmevorrichtung, bei der die einander gegenüberliegenden Mitnehmer von parallelen Teleskoparmen in der Arbeitsposition mit einem gleich großen Winkel schräggestellt werden können.

Aufgabe der Erfindung ist es daher, eine Lastaufnahmevorrichtung der eingangs genannten Art anzugeben, bei der auch für kleineres oder eine unregelmäßige Oberfläche aufweisendes Ladegut eine genau definierte Einlagerungs- und Auslagerungsbewegung erzielbar ist.

Weitere Aufgabe der Erfindung ist es, eine Lastaufnahmevorrichtung anzugeben, welche die Erhöhung der Betriebssicherheit und Fehlerreduzierung ermöglicht.

Weitere Aufgabe ist es, ein Erkennen und gegebenenfalls Geraderichten von in Schrägstellung bzw. in verdrehter Lage befindlichen Behältern zu ermöglichen, um einen Anlagenstillstand zu vermeiden.

Erfindungsgemäß wird dies dadurch erreicht, dass zumindest einer der Mitnehmer in zumindest eine zwischen der hochgeklappten Stellung und der im rechten Winkel abstehenden Stellung liegende schräge Stellung schwenkbar ist, in welcher der zumindest eine Mitnehmer um einen Schwenkwinkel α1, α2 gegenüber der hochgeklappten Stellung verschwenkt ist, wobei α1, α2 größer 0 und kleiner 90° ist, dass die Lastaufnahmevorrichtung eine Steuerung umfasst, wobei die Steuerung den Schwenkwinkel α1, α2 der Mitnehmer in Abhängigkeit von den Ladegutdimensionen einstellt, wobei die Information über die Breite des Ladegutes für die Steuerung dabei aus einer Tabelle, aus einem übergeordneten System, z.B. Lagerverwaltung, entnommen oder gemessen werden kann, und entsprechend die unabhängige Ansteuerung der einander gegenüberliegenden Mitnehmer erfolgt, und dass die Steuerung einen ersten Mitnehmer in die schräge Stellung, und einen zweiten Mitnehmer im rechten Winkel zur hochgeklappten Stellung einstellen kann, sodass der Abstand der Teleskoparme zueinander kleiner als die doppelte Länge der Mitnehmer eingestellt werden kann und somit die Teleskoparme sehr nahe an das Ladegut gestellt werden können.

Aufgrund dieser unabhängigen Verschwenkbarkeit der einander gegenüberliegenden Mitnehmer kann erreicht werden, dass bei kleiner Breite des Ladegutes zum Ausüben der Mitnehmerfunktion ein Mitnehmer in eine horizontale Position geschwenkt wird und der andere in seiner hochgeklappten Position belassen wird, sodass die Mitnehmer nicht mehr fluchtend ausgerichtet sind und die Teleskoparme näher zueinander bewegt werden können.

Weiters besteht die Möglichkeit, die Mitnehmer zum Ausüben ihrer Mitnehmerfunktion immer in eine solche Stellung zu schwenken, dass die Mitnehmer mit der Vorder- oder Hinterseite des Ladegutes an einer Stelle in Kontakt treten, die eine stabile, translatorische Verlagerungsbewegung ermöglicht, es also nicht zu einem Abrutschen des Mitnehmers oder zu einer Verdrehung des Ladegutes während der Verlagerungsbewegung kommt. Zu diesem Zweck kann eine Steuerung vorgesehen sein, die auf die Abmessungen des Ladegutes in einer Datenbank zugreifen kann und daraus die günstigste Schwenkposition der Mitnehmer berechnen kann.

Durch Steuerung in Abhängigkeit von dem Ausgangssignal der Kantendetektoren wiederum können die in ihre Mitnehmerposition zu schwenkenden Mitnehmer sehr genau im Bereich der Vorderkante oder Hinterkante positioniert werden, und damit verhindert werden, dass es bei Einsetzen der Teleskoparmbewegung zu einer Leerbeschleunigungsbewegung kommt, die einerseits die Dauer der Verlagerungsbewegung unnötig verlängert und andererseits auch Verformungen oder Beschädigungen am Ladegut verursachen kann, wenn es vom anfahrenden Mitnehmer getroffen wird. Gleichzeitig wirken sich dadurch aber auch die vielfachen Ein- und Auslagerungsvorgänge sehr mechanikschonend auf die Lastaufnahmevorrichtung aus, was zu einer erheblich längeren Lebensdauer der einzelnen Komponenten führt.

Aufgrund des dadurch erreichten geringeren Spaltes zwischen den Ladegütern ergibt sich eine bessere Raumnutzung, erhöhte Betriebs- und Ausfallsicherheit und Fehlerreduzierung. Die Regalfachdimensionen können aufgrund der genaueren Positionsbestimmung verringert werden.

In bevorzugter Weise wird die Detektion der Kanten von den Kantendetektoren in voneinander unabhängiger Weise vorgenommen.

Um eine genaue Einstellung der Schwenkposition der Mitnehmer zu ermöglichen, können gemäß einer Ausführungsform der Erfindung die Mitnehmer auf Schwenkachsen angebracht sein, welche jeweils mit einem über eine Steuervorrichtung steuerbaren Drehstellmotor gekoppelt sind, über den der Schwenkwinkel α1, α2 einstellbar ist.

Mithilfe des Drehstellmotors wird der eingestellte Schwenkwinkel auf einem konstanten Wert gehalten, sodass Abweichungen vom Sollwert des Schwenkwinkels ständig abgefühlt und korrigiert werden. Auf diese Weise kann nicht nur der jeweils anzusteuernde Schwenkwinkel sehr genau eingehalten und beliebig von 0 bis 90° eingestellt werden, es wird vor allem durch Anwendung des Drehstellmotors die Zeit für die Ausführung der Schwenkbewegung stark gegenüber bisherigen Anschlaglösungen reduziert, wodurch auch die Gesamtzeiten für die Ein- und Auslagerung stark herabgesetzt werden.

Eine vorteilhafte Weiterbildung der Erfindung kann darin bestehen, dass die zwei einander gegenüberliegenden Kantendetektoren an den Enden der Teleskoparme angeordnet sind.

Auf diese Weise können die in ihre Mitnehmerposition zu schwenkenden Mitnehmer sehr genau im Bereich der Vorderkante oder Hinterkante positioniert werden.

Eine Variante der Erfindung kann darin bestehen, dass die einander gegenüberliegenden Kantendetektoren durch Lichtabtastvorrichtungen gebildet sind, deren Reichweite ungefähr gleich dem Minimalabstand zwischen den Teleskoparmen ist, um eine gegenseitige Beeinflussung der Detektoren zu vermeiden.

Weiters betrifft die Erfindung ein Regalbediengerät mit einer erfindungsgemäßen Lastaufnahmevorrichtung.

Weiters betrifft die Erfindung ein Shuttle mit einer erfindungsgemäßen Lastaufnahmevorrichtung.

Weiters betrifft die Erfindung ein Verfahren zum Steuern einer Teleskoparme und schwenkbare Mitnehmer umfassenden Lastaufnahmevorrichtung nach einem der Ansprüche 1 bis 5, zur Ein- und Auslagerung eines quaderförmigen Ladeguts in ein Regal bzw. aus diesem, wobei das Verfahren die folgenden Schritte umfasst:
- Abtasten der beiden im Wesentlich parallel zu den Teleskoparmen liegenden Ladegutseitenwände während der Ausfahrbewegung der Teleskoparme, um eine vordere oder hintere Kante des Ladegutes zu detektieren,
   - Steuern der Schwenkbewegung der Mitnehmer in Abhängigkeit vom Ort der detektierten Ladekanten.

Weiters betrifft die Erfindung ein Verfahren zum Steuern einer Teleskoparme und schwenkbare Mitnehmer umfassenden Lastaufnahmevorrichtung nach einem der Ansprüche 1 bis 5, zur Ein- und Auslagerung eines quaderförmigen Ladeguts in ein Regal bzw. aus diesem, wobei das Verfahren die folgenden Schritte umfasst:
- Abtasten der beiden Ladegutseitenwände während der Ausfahrbewegung der Teleskoparme, um eine vordere oder hintere Kante des Ladegutes zu detektieren sowie Detektieren einer Schrägstellung des Ladegutes;
- Separates Ansteuern der Teleskoparme, die unterschiedlich zueinander verfahrbar sind, um das in Schrägstellung geratene Ladegut gerade zu richten.

Nachfolgend wird die Erfindung anhand von in den Zeichnungen dargestellten Ausführungsformen eingehend erläutert. Es zeigt dabei
Fig.1 eine Schrägansicht einer Ausführungsform der erfindungsgemäßen Lastaufnahmevorrichtung;
Fig.2 eine Schrägansicht der Lastaufnahmevorrichtung gemäß Fig.1 mit Ladgegut;
Fig.3 eine Schrägansicht der Lastaufnahmevorrichtung gemäß Fig.1 mit ausgefahrenen Teleskoparmen;
Fig.4 bis Fig.8 jeweils in Draufsicht aufeinanderfolgende Bewegungszustände der Teleskoparme der Lastaufnahmevorrichtung gemäß Fig.1;
Fig.9 eine Schrägansicht eines der Teleskoparme der Lastaufnahmevorrichtung gemäß Fig.1 und
Fig.10 bis 13 Vorderansichten mit unterschiedlichen Stellungen der einander gegenüberliegenden Mitnehmer der Teleskoparme.

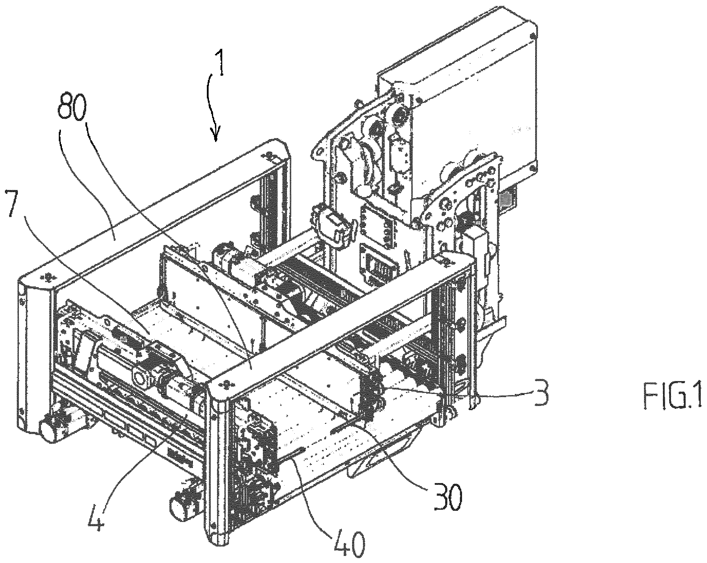

Fig.1 bis 3 zeigen eine Lastaufnahmevorrichtung 1 zur Ein- und Auslagerung eines quaderförmigen Ladeguts 2, z.B. Kartons, in ein (nicht dargestelltes) Regal bzw. aus diesem mit zwei parallel beabstandeten, ausfahrbaren Teleskoparmen 3, 4, die in einem Rahmen 80 angeordnet sind. Die Lastaufnahmevorrichtung 1 kann z.B. Teil eines Regalbediengerätes oder eines Shuttles sein.

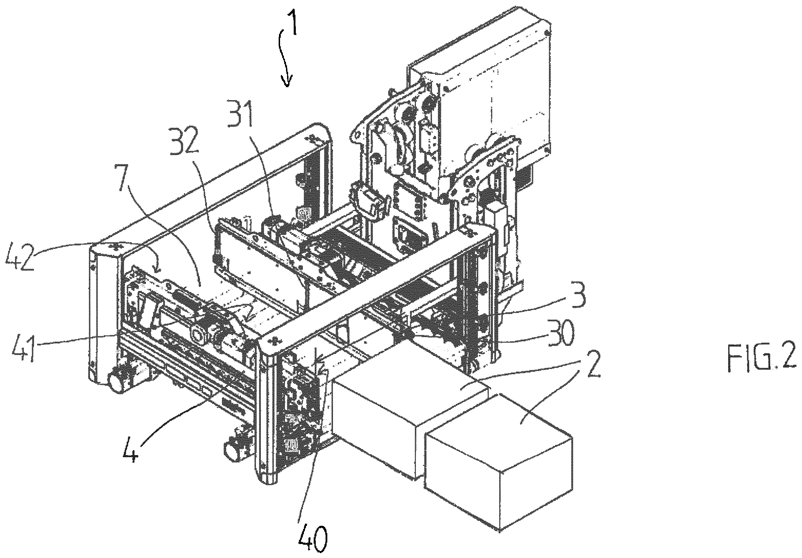

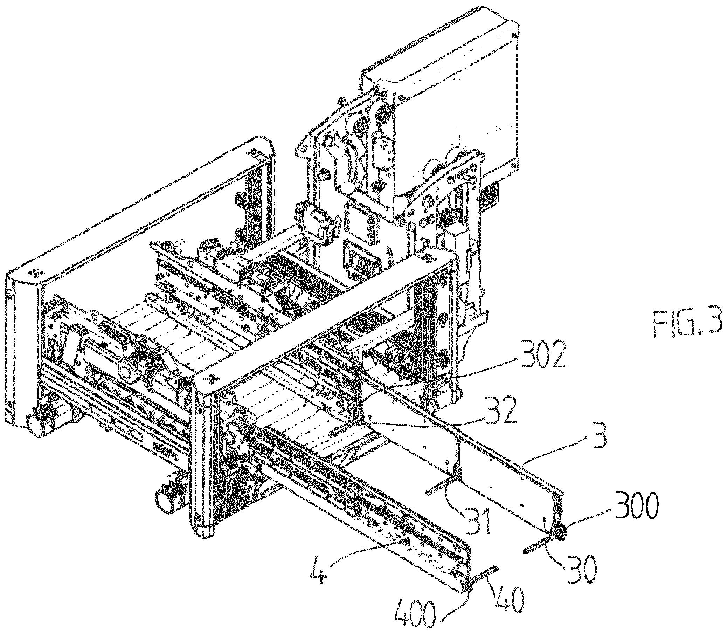

An der Unterseite der Lastaufnahmevorrichtung 1 sind Rollen 7 angeordnet, die die Bewegung des Ladegutes 2 freilaufend unterstützen aber auch angetrieben werden können, um eine Bewegung des Ladegutes 2 zu bewirken. Die Teleskoparme 3, 4 sind in Fig.1, 2 in ihrer eingefahrenen Stellung und in Fig.3 in ihrer an der Vorderseite der Lastaufnahmevorrichtung 1 ausgefahrenen Stellung gezeigt. Jeder Teleskoparm 3,4 ist im gezeigten Ausführungsbeispiel grundsätzlich in zwei einander entgegengesetzten Richtungen ausfahrbar, wobei in Fig.3 zur Vereinfachung der Darstellung nur die an der Vorderseite ausgefahrene Stellung dargestellt ist.

Auf den Teleskoparmen 3,4 sind paarweise einander gegenüberliegende Mitnehmer 30, 40, 31, 41, und 32,42 angeordnet, die in eine hochgeklappte, senkrechte Stellung im Wesentlichen parallel zur Teleskoparmebene (Fig.2) und in eine im Wesentlichen im rechten Winkel zu dieser vorstehende, horizontale Stellung (Fig.1, Fig.3, Fig.9) verschwenkbar sind.

Der Abstand d zwischen den Teleskoparmen 3, 4 ist in Abhängigkeit von der Breite des Ladegutes einstellbar.

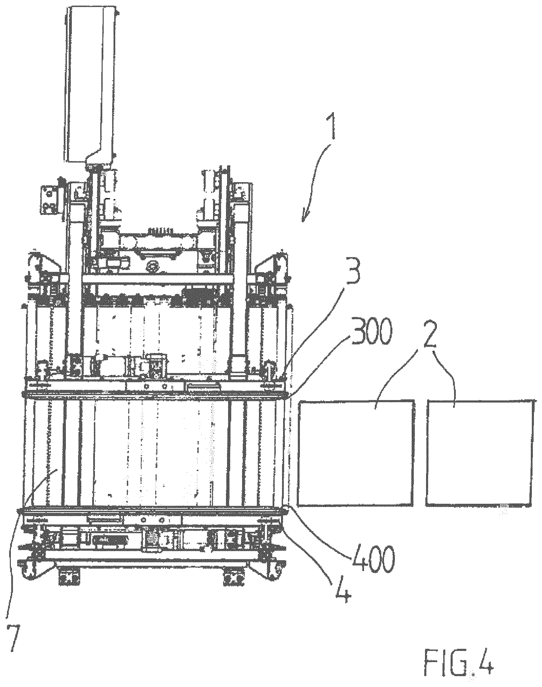

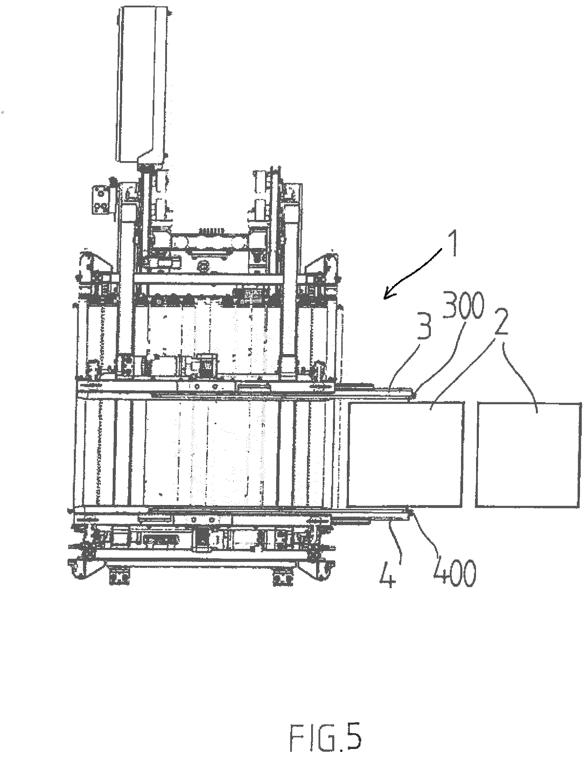

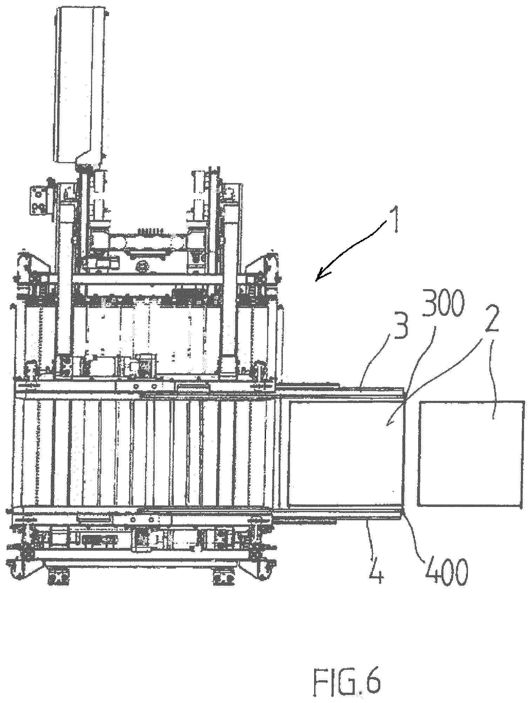

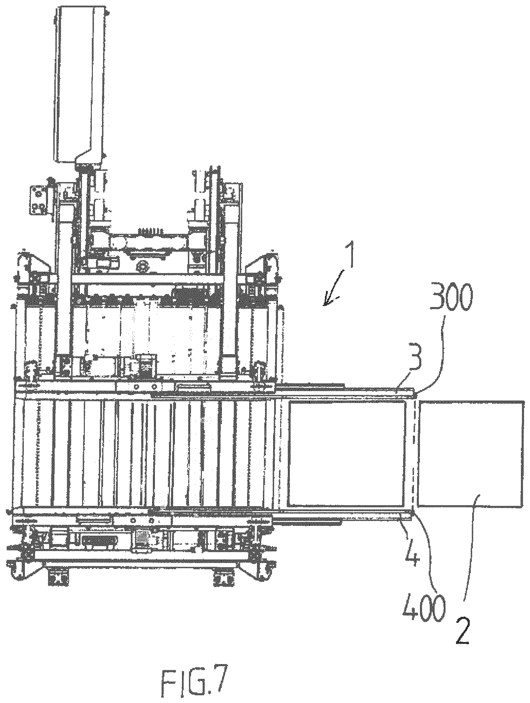

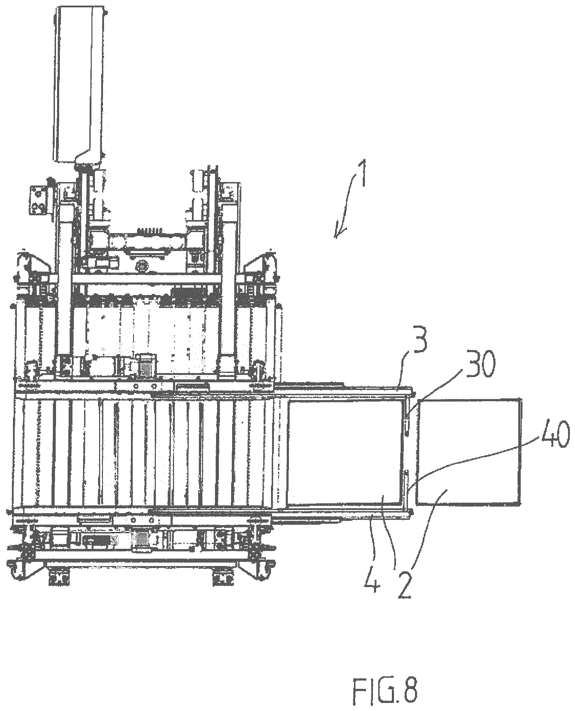

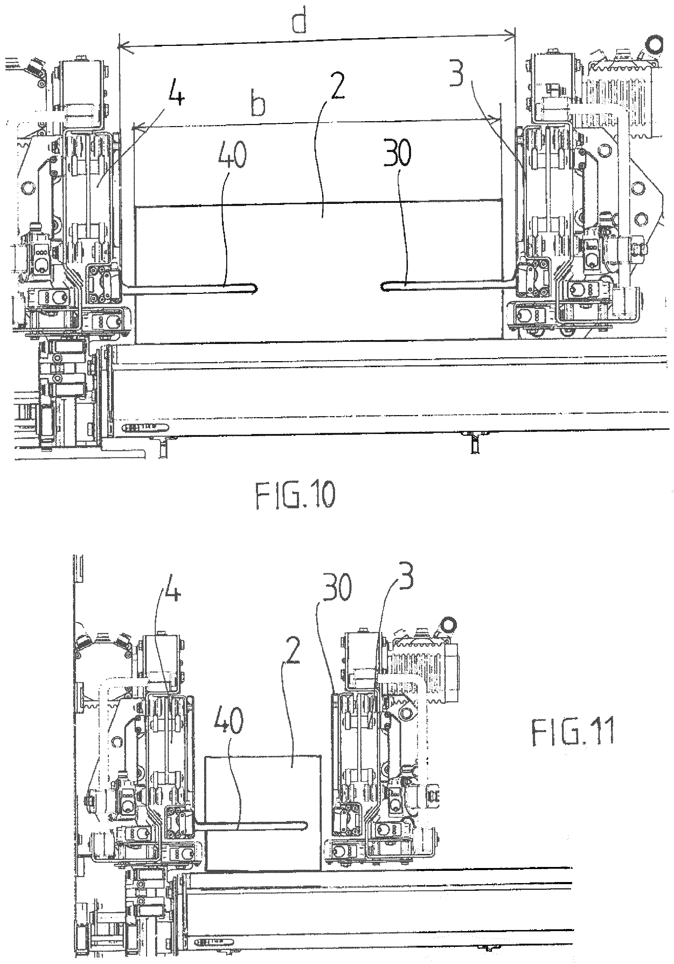

Fig.4 bis Fig.8 zeigen die zeitliche Abfolge der Ausfahr- und Ausklappbewegungen beim Auslagern von Ladegut 2, hier zwei Kartonbehälter, aus einem (nicht dargestellten) Regalfach. Aus der eingefahrenen Stellung in Fig.4 werden die parallel beabstandeten Teleskoparme 3, 4 ausgefahren (Fig.5, 6) bis die Mitnehmer 30, 40 in eine Position (Fig.7) zwischen den beiden Kartonbehältern 2 gelangen, wo sie von ihrer hochgeklappten in die vorstehende Position verschwenkt werden. In dieser vorstehenden Stellung der Mitnehmer 30, 40, die in Fig.10 in einer vergrößerten Darstellung wiedergegeben ist, werden die Teleskoparme 3, 4 wieder in ihre eingefahrene Stellung zurückbewegt und verschieben dabei den vorderen Kartonbehälter 2 auf die Lastaufnahmevorrichtung 1, mit der der Kartonbehälter 2 dann weiter verfahrbar ist.

Fig.10 zeigt darüber hinaus Details der Lagerung der aus mehreren Teilen bestehenden Teleskoparme 3, 4, welche nicht erfindungswesentlich und nicht näher beschrieben sind, da sie für die Zwecke der Erfindung unterschiedlich ausgeführt sein können.

Wie aus Fig.10 erkennbar, wird der Abstand d zwischen den beiden Teleskoparmen 3, 4 jeweils so eingestellt, dass dieser bis auf einen Randabstand ungefähr der Ladegutbreite b entspricht, wodurch die Mitnehmer 30, 40 mit fast ihrer gesamten Länge auf dem Ladegut aufliegen, wodurch eine stabile und verdrehsichere Bewegung des Ladegutes gewährleistet ist.

Bei gegenüberliegenden vorstehenden Mitnehmern 30, 40 kann der Abstand d zwischen den Teleskoparmen 3, 4, nicht kleiner als auf etwa die zweifache Länge der Mitnehmer eingestellt werden, wodurch bei Ladegut mit geringerer Breite als dieser Mindestabstand keine gute Führung des Ladegutes 2 möglich ist.

Dabei sind daher, wie in Fig.11 dargestellt, die jeweils einander gegenüberliegenden Mitnehmer 30,40, 31,41 und 32,42 unabhängig voneinander verschwenkbar.

Bei einem Ladegut mit sehr kleiner Breite wird dann z.B. wie in Fig.11 gezeigt, der eine Mitnehmer 40 in seine horizontale vorstehende Position geschwenkt, während der andere gegenüberliegende Mitnehmer 30 in seiner hochgeklappten Stellung belassen wird. Dadurch können die Teleskoparme 3, 4 bis auf einen Randabstand an das Ladegut herangefahren werden und die Führung und Bewegung nur durch den Mitnehmer 40 bewirkt werden.

Die Information über die Breite des Ladegutes 2 für die Steuerung wird dabei aus einer Tabelle, aus einem übergeordnetem System, z.B. Lagerverwaltung, entnommen oder gemessen. Entsprechend erfolgt die unabhängige Ansteuerung der einander gegenüberliegenden Mitnehmer 30, 40.

Weiters ist es vorgesehen, dass die Mitnehmer 30, 40 in zumindest eine zwischen der hochgeklappten Stellung und der im rechten Winkel abstehenden Stellung liegende schräge Stellung schwenkbar sind, in welche die Mitnehmer 30, 40 jeweils um einen Schwenkwinkel α1, α2 gegenüber der hochgeklappten Stellung verschwenkt sind, wobei α1, α2 größer 0 und kleiner 90° ist.

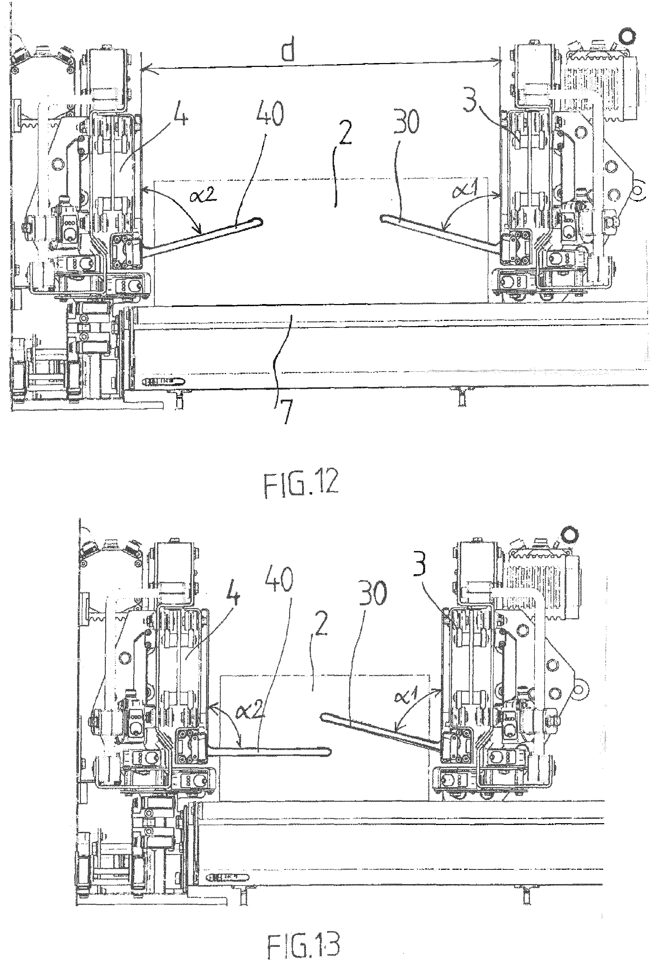

In Fig.12 ist eine Stellung der Mitnehmer 30, 40 gewählt, bei der α1 = α2 ungefähr gleich 75° ist und die Mitnehmer 30, 40 jeweils einen gleichen Schwenkwinkel einnehmen, wodurch sie jeweils an einer anderen Stelle des Ladegutes als in der 90°-Stellung aufliegen. Die Steuerung kann dabei auf in einer Tabelle abgelegte Strukturdaten des Ladegutes 2 zugreifen, aus einem übergeordnetem System, z.B. Lagerverwaltung, die entsprechenden Sollpositionen erhalten oder es wird dieses vor Ort vermessen und den Schwenkwinkel α1, α2 so einstellen, dass ein stabiles und verdrehsicheres Bewegen des Ladegutes durch die Mitnehmer 30, 40 ermöglicht wird.

Eine weitere Möglichkeit der Positionierung der Mitnehmer 30, 40 ist in Fig. 13 gezeigt, wo α1 = 75° und α2 = 90° eingestellt ist, sodass der Abstand der Teleskoparme 3, 4 zueinander kleiner als die doppelte Länge der Mitnehmer 30, 40 eingestellt werden kann und somit die Teleskoparme 3, 4 sehr nahe an das Ladegut gestellt werden können. Damit kann einerseits auf die geringe Breite des Ladegutes Rücksicht genommen und andererseits auch eine günstige Auflageposition der Mitnehmer 30, 40 ausgewählt werden. Die Wahl der Winkel α1, α2 kann je nach Steuerung und Stellmotor in beliebiger Weise kontinuierlich oder zumindest in sehr kleinen Schritten erfolgen.

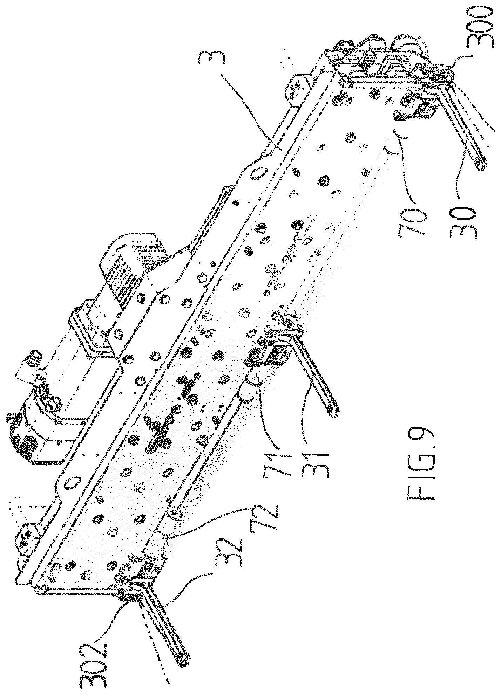

Wie in Fig. 9 gezeigt sind die Mitnehmer 30, 31, 32 und die in dieser Darstellung nicht gezeigten jeweils gegenüberliegenden Mitnehmer 40, 41, 42 auf Schwenkachsen angebracht, welche jeweils mit einem über eine nicht dargestellte Steuervorrichtung steuerbaren Drehstellmotor 70, 71, 72 gekoppelt sind, über den der Schwenkwinkel α1 bzw. α2 einstellbar ist. Der steuerbare Drehstellmotor 70, 71, 72 kann z.B. durch einen bürstenlosen Servomotor mit integriertem Motion-Controller gebildet sein.

Wie bereits erwähnt einstellt die Steuerung den Schwenkwinkel α1, α2 der Mitnehmer 30, 40 in Abhängigkeit von den Ladegutdimensionen.

An den Enden der Teleskoparme 3, 4 sind zwei einander gegenüberliegende Kantendetektoren 300, 400 angeordnet, die den zwei einander gegenüberliegenden Mitnehmern 30, 40 zugeordnet sind.

Die Mitnehmer 30, 40 sind in Abhängigkeit vom Ausgangssignal der Kantendetektoren 300 unabhängig voneinander verschwenkbar.

Je nach Einsatzsituation kann der Anbringungsort der einander gegenüberliegenden Mitnehmer und Kantendetektoren variieren. So kann zwischen den an entgegengesetzten Enden der Teleskoparme 3, 4 angeordneten Mitnehmerpaaren 30, 40 und 32, 42 dazwischen noch das weitere Mitnehmerpaar 31, 41, vorzugsweise in der Mitte (Fig.3, 9), oder noch weitere Mitnehmerpaare angeordnet sein. Genauso können diesen weiteren Mitnehmerpaaren weitere einander gegenüberliegende Kantendetektoren zugeordnet sein, die für eine zeitsparende und ladegutschonende Steuerung der Mitnehmer angewandt werden können.

Die einander gegenüberliegenden Kantendetektoren 300, 400 können durch Lichtabtastvorrichtungen gebildet sein, deren Reichweite ungefähr gleich dem Minimalabstand zwischen den Teleskoparmen ist.

Ein Verfahren zur Ein- und Auslagerung eines quaderförmigen Ladeguts 2 in ein Regal bzw. aus diesem besteht aus den folgenden Schritten:
- Abtasten der beiden im Wesentlich parallel zu den Teleskoparmen 3, 4 liegenden Ladegutseitenwände während der Ausfahrbewegung der Teleskoparme 3, 4, um eine vordere oder hintere Kante des Ladegutes 2 zu detektieren,
- Steuern der Schwenkbewegung der Mitnehmer 30, 40 in Abhängigkeit vom Ort der detektierten Ladekanten.

Ein weiteres Verfahren unter Anwendung der erfindungsgemäßen Lastaufnahmevorrichtung ermöglicht das Geraderichten von in Schrägstellung geratenenen Behälter durch Ausführung der folgenden Schritte:
Abtasten der beiden Ladegutseitenwände während der Ausfahrbewegung der Teleskoparme 3, 4, um eine vordere oder hintere Kante des Ladegutes 2 zu detektieren sowie Detektieren einer Schrägstellung des Ladegutes 2,
- Separates Ansteuern der Teleskoparme 3, 4, die unterschiedlich zueinander verfahrbar sind, um das in Schrägstellung geratene Ladegut 2 gerade zu richten.

Das Detektieren der Schrägstellung des Ladegutes 2 erfolgt dabei durch die Signale der einander gegenüberliegenden Kantendetektoren, welche z.B. Eckpositionen des Ladegutes mit einer bestimmten Versetzung zueinander detektieren, woraus das Ausmaß der Schrägstellung bzw. der verdrehten Lage des Ladegutes errechenbar ist. In entsprechender Weise werden die Teleskoparme unterschiedlich weit ausgefahren, um während der Aus- oder Einfahrbewegung die Schrägstellung des Ladegutes 2 auszugleichen, sodass dieses geradegerichtet wird. Bisher wurde eine solche Lagerposition nicht mehr angefahren und musste während eines Anlagenstillstands manuell behoben werden.

## Patentansprüche

1. Lastaufnahmevorrichtung (1) zur Ein- und Auslagerung eines quaderförmigen Ladeguts (2) in ein Regal bzw. aus diesem mit zwei parallel beabstandeten, ausfahrbaren Teleskoparmen (3, 4), auf denen paarweise einander gegenüberliegende Mitnehmer (30, 40, 31, 42, 32, 42) angeordnet sind, die in eine hochgeklappte Stellung im Wesentlichen parallel zur Teleskoparmebene und in eine im Wesentlichen im rechten Winkel zu dieser vorstehenden Stellung verschwenkbar sind, wobei der Abstand (d) zwischen den Teleskoparmen (3, 4) in Abhängigkeit von der Breite des Ladegutes einstellbar ist, wobei jeder der paarweise einander gegenüberliegenden Mitnehmer (30, 40) unabhängig vom jeweils gegenüberliegenden Mitnehmer verschwenkbar ist, und wobei an den Teleskoparmen (3, 4) zumindest zwei einander gegenüberliegende Kantendetektoren (300, 400, 302, 402) angeordnet sind, die zwei einander gegenüberliegenden der Mitnehmer (30, 40, 32, 42) zugeordnet sind, und dass die Mitnehmer (30, 40) in Abhängigkeit vom Ausgangssignal der Kantendetektoren (300, 400, 302, 402) unabhängig voneinander verschwenkbar sind, **dadurch gekennzeichnet, dass** zumindest einer der Mitnehmer (30, 40) in zumindest eine zwischen der hochgeklappten Stellung und der im rechten Winkel abstehenden Stellung liegende schräge Stellung schwenkbar ist, in welcher der zumindest eine Mitnehmer (30, 40) um einen Schwenkwinkel α1, α2 gegenüber der hochgeklappten Stellung verschwenkt ist, wobei α1, α2 größer 0 und kleiner 90° ist, dass die Lastaufnahmevorrichtung eine Steuerung umfasst, wobei die Steuerung den Schwenkwinkel α1, α2 der Mitnehmer (30, 40) in Abhängigkeit von den Ladegutdimensionen einstellt, wobei die Information über die Breite des Ladegutes (2) für die Steuerung dabei aus einer Tabelle, aus einem übergeordneten System, z.B. Lagerverwaltung, entnommen oder gemessen werden kann, und entsprechend die unabhängige Ansteuerung der einander gegenüberliegenden Mitnehmer (30, 40) erfolgt, und dass die Steuerung einen ersten Mitnehmer (30, 40) in die schräge Stellung, und einen zweiten Mitnehmer im rechten Winkel zur hochgeklappten Stellung einstellen kann, sodass der Abstand der Teleskoparme (3, 4) zueinander kleiner als die doppelte Länge der Mitnehmer (30, 40) eingestellt werden kann und somit die Teleskoparme(3, 4) sehr nahe an das Ladegut gestellt werden können.

2. Lastaufnahmevorrichtung nach Anspruch 1, **dadurch gekennzeichnet, dass** die Mitnehmer (30, 40) auf Schwenkachsen angebracht sind, welche jeweils mit einem über eine Steuervorrichtung steuerbaren Drehstellmotor (70, 71, 72) gekoppelt sind, über den der Schwenkwinkel α1, α2 einstellbar ist.

3. Lastaufnahmevorrichtung nach Anspruch 1 oder 2 **dadurch gekennzeichnet, dass** die zwei einander gegenüberliegenden Kantendetektoren (300, 400) an den Enden der Teleskoparme (3, 4) angeordnet sind.

4. Lastaufnahmevorrichtung nach Anspruch 3, **dadurch gekennzeichnet, dass** die einander gegenüberliegenden Kantendetektoren (300, 400) durch Lichtabtastvorrichtungen gebildet sind, deren Reichweite ungefähr gleich dem Minimalabstand zwischen den Teleskoparmen ist.

5. Lastaufnahmevorrichtung nach einem der Ansprüche 1 bis 4, **dadurch gekennzeichnet, dass** die Teleskoparme jeweils mit einem eigenen Antrieb versehen sind, sodass sie getrennt voneinander ansteuerbar und unterschiedlich zueinander verfahrbar sind.

6. Regalbediengerät mit einer Lastaufnahmevorrichtung nach einem der Ansprüche 1 bis 5.

7. Shuttle mit einer Lastaufnahmevorrichtung nach einem der Ansprüche 1 bis 5.

8. Verfahren zum Steuern einer Teleskoparme und schwenkbare Mitnehmer umfassenden Lastaufnahmevorrichtung nach einem der Ansprüche 1 bis 5, zur Ein- und Auslagerung eines quaderförmigen Ladeguts (2) in ein Regal bzw. aus diesem, **gekennzeichnet durch:**
- Abtasten der beiden im Wesentlich parallel zu den Teleskoparmen liegenden Ladegutseitenwände während der Ausfahrbewegung der Teleskoparme (3, 4), um eine vordere oder hintere Kante des Ladegutes zu detektieren,
- Steuern der Schwenkbewegung der Mitnehmer (30, 40) in Abhängigkeit vom Ort der detektierten Ladekanten.

9. Verfahren zum Steuern einer Teleskoparme und schwenkbare Mitnehmer umfassenden Lastaufnahmevorrichtung nach einem der Ansprüche 1 bis 5, zur Ein- und Auslagerung eines quaderförmigen Ladeguts (2) in ein Regal bzw. aus diesem, **gekennzeichnet durch:**
- Abtasten der beiden Ladegutseitenwände während der Ausfahrbewegung der Teleskoparme (3, 4), um eine vordere oder hintere Kante des Ladegutes zu detektieren sowie Detektieren einer Schrägstellung des Ladegutes (2)
- Separates Ansteuern der Teleskoparme (3, 4), die unterschiedlich zueinander verfahrbar sind, um das in Schrägstellung geratene Ladegut (2) gerade zu richten.

## Claims

1. A load-receiving device (1) for storing a cuboidal load (2) in a rack and retrieving it therefrom, having two extendable telescopic arms (3, 4), which are spaced apart in parallel and on which drivers (30, 40, 31, 41, 32, 42) are arranged opposite one another in pairs, which drivers can be pivoted into a swung-up position, where they are substantially in parallel to the plane of the telescopic arms, and into a projecting position in which they are essentially perpendicular to said swung-up position, wherein the distance (d) between the telescopic arms (3, 4) is set depending on the width of the load, wherein each of the drivers (30, 40) that are arranged opposite one another in pairs is pivotable independently in relation to its respective opposite driver and wherein at least two edge detectors (300, 400, 302, 402) are arranged on the telescopic arms (3, 4) opposite one another and are assigned to two of the drivers (30, 40, 32, 42) that are arranged opposite one another and the drivers (30, 40) are independently pivotable in relation to one another depending on the output signal of the edge detectors (300, 400, 302, 402), **characterized in that** at least one of said drivers (30, 40) can be pivoted into an inclined position between said swung-up position and said perpendicularly projecting position, where said at least one driver (30, 40) is pivoted at a pivot angle α1, α2 in relation to said swung-up position, wherein α1, α2 is larger than 0° and smaller than 90°, **in that** said load-receiving device comprises a control, said control setting the pivot angle α1, α2 of the drivers (30, 40) depending on the load dimensions, the information on the width of the load (2) being retrieved by the control from a table, a superior system, e.g., a warehouse management system, or measured and the drivers (30, 40) that are arranged opposite one another being independently controlled accordingly, and **in that** the control may set a first driver (30, 40) in said inclined position and a second driver perpendicularly to said swung-up position, so that the distance between the telescopic arms (3, 4) is smaller than twice the length of the driver (30, 40) and the telescopic arms (3, 4) can thus be brought very close to the load.

2. The load-receiving device according to claim 1, **characterized in that** the drivers (30, 40) are mounted on pivot axes each of which is coupled to a controllable rotary servo-motor (70, 71, 72) which sets the pivot angle α1, α2.

3. The load-receiving device according to claim 1 or claim 2, **characterized in that** said two edge detectors (300, 400) that are arranged opposite one another are arranged at the end of the telescopic arms (3, 4).

4. The load-receiving device according to claim 3, **characterized in that** said edge detectors (300, 400) that are arranged opposite one another are formed by light-sensing devices whose range approximately corresponds to the minimal distance between the telescopic arms.

5. The load-receiving device according to any one of the claims 1 to 4, **characterized in that** each of said telescopic arms is provided with its own drive, so that they may be controlled separately and moved differently in relation to one another.

6. A storage and retrieval device with the load-receiving device according to any one of the claims 1 to 5.

7. Shuttle with the load-receiving device according to any one of the claims 1 to 5.

8. A method for controlling the load-receiving device according to any one of the claims 1 to 5, comprising telescopic arms and pivotable drivers, for storing a cuboid load (2) in a rack and retrieving it therefrom, **characterized by:**
- sensing the two side-walls of the load that are essentially parallel to the telescopic arms during the extension movement of the telescopic arms (3, 4) to detect a front or rear edge of the load,
- controlling the pivoting movement of the drivers (30, 40) depending on the location of the detected edges.

9. The method for controlling the load-receiving device according to any one of the claims 1 to 5, comprising telescopic arms and pivotable drivers, for storing a cuboid load (2) in a rack and retrieving it therefrom, **characterized by:**
- sensing the two side-walls of the load during the extension movement of the telescopic arms (3, 4) to detect a front or rear edge of the load and detecting any inclined position of the load (2),
- separately controlling the telescopic arms (3, 4) that may be moved independently from one another to put the load (2) that has got into an inclined position back into a normal position.

## Revendications

1. Dispositif de réception de charges (1) pour poser une charge (2) en forme de parallélépipède rectangle sur une étagère et l'enlever de celle-ci, le dispositif ayant deux bras télescopiques (3, 4) extensibles et espacés parallèlement l'un par rapport à l'autre, sur lesquels sont disposés, par paires opposées, des éléments d'entraînement (30, 40, 31, 41, 32, 42), qui sont susceptibles à êtres pivotés vers une position relevée, dans laquelle ils sont essentiellement parallèles au plan des bras télescopiques, et vers une position saillante, dans laquelle ils sont essentiellement perpendiculaires à la position relevée, l'écart (d) entre les bras télescopiques (3, 4) étant réglable en fonction de la largeur de la charge, chacun des éléments d'entraînement (30, 40) disposés par paires opposées étant susceptible à être pivoté indépendamment de l'élément d'entraînement opposé, et au moins deux détecteurs de bords (300, 400, 302, 402), associés à deux des éléments d'entraînement (30, 40, 21, 42) opposés, étant disposés, l'un opposé à l'autre, sur les bras télescopiques (3, 4), et les éléments d'entraînement (30, 40) étant susceptibles à être pivotés indépendamment les uns des autres en fonction du signal de sortie des détecteurs de bords (300, 400, 302, 402), **caractérisé en ce qu'**au moins un des éléments d'entraînement (30, 40) est susceptible à être pivoté vers au moins une position inclinée entre la position relevée et la position saillante de façon perpendiculaire, dans laquelle l'au moins un élément d'entraînement (30, 40) est pivoté d'un angle de pivotement α1, α2 par rapport à la position relevée, α1, α2 étant supérieur à 0 et inférieur à 90°, **en ce que** le dispositif de réception de charges comprend une commande, la commande réglant l'angle de pivotement α1, α2 des éléments d'entraînement (30, 40) en fonction des dimensions de la charge, l'information sur la largeur de la charge (2) pour la commande pouvant être extraite d'un tableau, d'un système de rang supérieur, par exemple un système de gestion d'entrepôt, ou mesurée, et les éléments d'entraînement (30, 40) opposés étant commandés en fonction de cette information, et **en ce que** la commande peut régler un premier élément d'entraînement (30, 40) dans la position inclinée et un deuxième élément d'entraînement dans l'angle droit par rapport à la position relevée, de sorte que l'écart entre les bras télescopiques (3, 4) peut être réglé à être inférieur à deux fois la longueur des éléments d'entraînement (30, 40), ce qui permet de rapprocher les bras télescopiques (3, 4) à proximité immédiate de la charge.

2. Dispositif de réception de charges selon la revendication 1, **caractérisé en ce que** les éléments d'entraînement (30, 40) sont montés sur des axes de pivotement, qui sont chacun couplés avec un moteur de réglage rotatif (70, 71, 72) susceptible à être commandé par un dispositif de commande, l'angle de pivotement α1, α2 étant réglé par ledit moteur.

3. Dispositif de réception de charges selon les revendications 1 ou 2, **caractérisé en ce que** les deux détecteurs de bords (300, 400) opposés sont disposés aux extrémités des bras télescopiques (3, 4).

4. Dispositif de réception de charges selon la revendication 3, **caractérisé en ce que** les détecteurs de bords (300, 400) opposés sont formés par des dispositifs de détection de lumière, dont la portée correspond environ à l'écart minimum entre les bras télescopiques.

5. Dispositif de réception de charges selon l'une quelconque des revendications 1 à 4, **caractérisé en ce que** chacun des bras télescopique est doté de son propre entraînement, de sorte qu'ils peuvent être commandés séparément et déplacés différemment l'un par rapport à l'autre.

6. Transstockeur ayant un dispositif de réception de charges selon l'une quelconque des revendications 1 à 5.

7. Navette ayant un dispositif de réception de charges selon l'une quelconque des revendications 1 à 5.

8. Procédé pour commander un dispositif de réception de charges selon l'une quelconque des revendications 1 à 5 comprenant des bras télescopiques et des éléments d'entraînement pivotables pour poser une charge (2) en forme de parallélépipède rectangle sur une étagère et l'enlever de celle-ci, **caractérisé par :**
- la détection des deux faces latérales de la charge, qui sont essentiellement parallèles aux bras télescopiques, pendant le mouvement d'extension des bras télescopiques (3, 4), pour détecter un bord avant ou arrière de la charge,
- la commande du mouvement de pivotement des éléments d'entraînement (30, 40) en fonction de la position des bords de la charges détectés.

9. Procédé pour commander un dispositif de réception de charges selon l'une quelconque des revendications 1 à 5 comprenant des bras télescopiques et des éléments d'entraînement pivotables pour poser une charge (2) en forme de parallélépipède rectangle sur une étagère et l'enlever de celle-ci, **caractérisé par** :
- la détection des deux faces latérales de la charge pendant le mouvement d'extension des bras télescopiques (3, 4), pour détecter un bord avant ou arrière de la charge, ainsi que la détection d'une éventuelle position inclinée de la charge (2),
- la commande séparée des bras télescopiques (3, 4) qui peuvent être déplacés différemment l'un par rapport à l'autre, pour redresser la charge (2) inclinée.
